# EUROPÄISCHE PATENTSCHRIFT

(11) **EP 3 347 156 B1**
(45) Veröffentlichungstag und Bekanntmachung des Hinweises auf die Patenterteilung: **12.02.2020**
(21) Anmeldenummer: 16784429.9
(22) Anmeldetag: 12.10.2016
(51) Int. Cl.: B23K 15/00, B23K 26/34, B23K 101/00, B23K 103/18

(54) **VERFAHREN ZUM LASERPULVERAUFTRAGSCHWEISSEN MIT OSZILLIERENDER ERSTARRUNGSFRONT DURCH DEFINIEREN VON PARAMETERN DES LASERPULVERAUFTRAGSCHWEISSENS**
METHOD OF LASER POWDER BUILD-UP WELDING WITH OSCILLATING SOLIDIFICATION FRONT BY DEFINING PARAMETERS OF THE LASER POWDER BUILD-UP WELDING
PROCÉDÉ D'APPORT DE POUDRE METALLIQUE PAR SOUDURE LASER AVEC FRONT DE SOLIDIFICATION OSCILLANT EN DÉFINISSANT DES PARAMÈTRES D'APPORT DE POUDRE METALLIQUE PAR SOUDURE LASER

(30) Priorität: 10.11.2015 DE 102015222084
(43) Veröffentlichungstag der Anmeldung: 18.07.2018
(73) Patentinhaber: Siemens Aktiengesellschaft, 80333 München (DE); Fraunhofer Gesellschaft zur Förderung der angewandten Forschung E.V., 80686 München (DE)
(72) Erfinder: ARJAKINE, Nikolai, 199004 Sankt Petersburg (RU); BOSTANJOGLO, Georg, 14163 Berlin (DE); BURBAUM, Bernd, 14612 Falkensee (DE); GASSER, Andres, 52066 Aachen (DE); LINNENBRINK, Stefanie, 52372 Kreuzau (DE); MENTZEL, Frank, 52066 Aachen (DE); OTT, Michael, 45470 Mülheim an der Ruhr (DE); PIRCH, Norbert, 52074 Aachen (DE)
(86) Internationale Anmeldenummer: PCT/EP2016/074482
(87) Internationale Veröffentlichungsnummer: WO 2017/080741

(56) Entgegenhaltungen:
- WO-A1-2015/156181
- JP-A- 2001 287 062
- US-A- 4 832 982
- US-A1- 2006 255 019
- US-A1- 2015 198 052
- US-A1- 2015 266 124

## Beschreibung

Die Erfindung betrifft ein Verfahren zum Laserpulverauftragschweißen mit oszillierender Erstarrungsfront gemäß dem Oberbegriff des Anspruchs 1 (siehe z.B. US 4 832 982). Durch diese Oszillation beim Auftragschweißen können eine Keimbildung und ein Kornwachstum in der breiigen Zone (mushy zone) gezielt beeinflusst werden, so dass das Wachstum einer kolumnaren Erstarrungsfront unterdrückt bzw. vollständig vermieden wird. Dabei ergibt sich in der Mikrostruktur eine sehr feinkörnige Struktur mit Korngrößen viel kleiner als die generierte Schichthöhe.

Es ist daher Aufgabe der Erfindung das Problem der kolumnaren Erstarrung zu lösen und die Wobbel-Strategie zu verbessern.

Die Aufgabe wird gelöst durch ein Verfahren gemäß Anspruch 1.

In den Unteransprüchen sind vorteilhafte Maßnahmen aufgelistet, die beliebig miteinander kombiniert werden können, um weitere Vorteile zu erzielen.

Es zeigen
- Figur 1, 2: eine Anordnung und Vorgehensweise nach dem Stand der Technik,
- Figur 3: eine erfindungsgemäße Ausgestaltung des Verfahrens.

Die Figur und die Beschreibung stellen nur Ausführungsbeispiele der Erfindung dar.

Die Vorteile sind verbesserte Materialeigenschaften des Bauteils im Vergleich zu konventionell geschweißten Bauteilen.

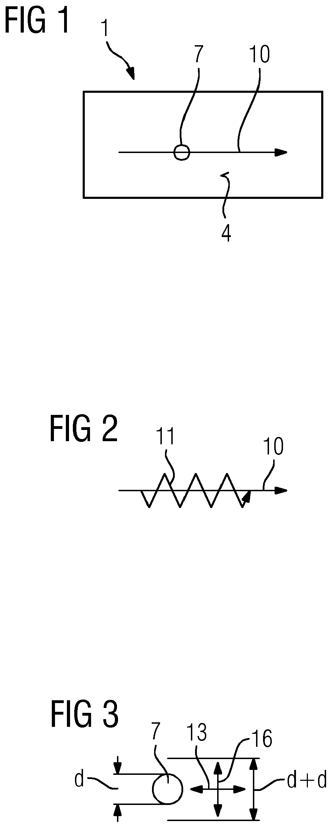

In Figur 1 ist dargestellt, wie ein Bauteil 1, insbesondere eine Turbinenkomponente mit einer Oberfläche 4 mittels eines Energiestrahls 7 bearbeitet wird.

Bei der Bearbeitung handelt es sich um ein Auftragschweißen, insbesondere ein Laserauftragschweißen, bei dem ein Energiestrahl 7, insbesondere ein Laserstrahl 7, mit seinem Durchmesser d am Bearbeitungsort, insbesondere im Fokus entlang einer Bewegungsrichtung 10 bewegt wird. Die allgemeine Bewegungsrichtung 10 ist gemäß der Erfindung linear und stellt die überlagerte Gesamtrichtung einer oszillierenden oder pendelnden Bewegung 11 dar (Fig. 2).

Die Zick-Zack-Darstellung (Fig. 2) der oszillierenden Bewegung 11 ist nur ein Beispiel für eine oszillierende Bewegung des Laserstrahls. Mit Bewegung bzw. Vorschub ist immer eine relative Bewegung zwischen Laserstrahl 7 und Substrat 4 gemeint.

Unter "linear" können auch mäanderförmige Bewegungsmuster für eine zu beschichtende Fläche verstanden werden, d. h. die resultierende Vorwärtsbewegung ist linear.

Erfindungsgemäß wird die Erstarrungsfront des aufgetragenen Materials oszillieren gelassen. Dabei oszilliert der Laserstrahl 7 entlang der Richtung 13 des Vorschubs und/oder senkrecht dazu zur Richtung 16.

Die Amplitude, mit dem der Laserstrahl oszilliert, beträgt zwischen 35% und 65% des Durchmessers d oder 70% bis 130% des Radius des Laserstrahls am Bearbeitungsort 7 (Fig. 3): x = (0,35 - 0,65) d, insbesondere ist die Amplitude x = ½ d = r.

Für jede Geschwindigkeit des "Scanners" des Laserstrahls und der Amplitude gibt es eine Obergrenze für die Frequenz, ab der eine Verbesserung nicht mehr erzielt wird.

Die Frequenz zwischen der sich der Laserstahl 7 zwischen zwei Auslenkungen hin und her bewegt, beträgt zwischen 20Hz und 50Hz, insbesondere zwischen 30Hz und 40Hz, ganz insbesondere 35Hz.

Der Stahldurchmesser des Laserstrahls 7 beträgt gemäß der Erfindung 500µm bis 1200µm, ganz vorzugsweise 600µm bis 800µm.

Die allgemeine Vorschubgeschwindigkeit beträgt vorzugsweise 500 mm/min.
Für eine größere Vorschubgeschwindigkeit muss eine größere Frequenz eingestellt werden. Welche Frequenz geeignet ist hängt von dem Vorschub ab.
Sie muss so eingestellt werden, dass die resultierende Spur nicht als Zickzackspur erscheint, sondern so ausgebildet wird, dass die Spurgeometrie so wie die einer herkömmlich geschweißten Spur ist.

Ist die Frequenz zu groß, tritt der Effekt der Kornneubildung nicht mehr auf.

## Patentansprüche

1. Verfahren
zum Laserpulverauftragschweißen mit oszillierender Erstarrungsfront, bei dem ein Laserstrahl (7), oszilliert, **dadurch gekennzeichnet, dass** der Laserstrahl (7) mit einer Frequenz von 20Hz bis 50Hz oszilliert,
insbesondere mit 35Hz,
und die Amplitude der Oszillation zwischen 35% und 65%, insbesondere 50% des Durchmessers (d) des Energiestrahls (7) am Bearbeitungsort,
insbesondere im Fokus,
beträgt,
mit einer allgemeinen linearen Bewegungsrichtung (10), die die überlagerte Gesamtrichtung einer oszillierenden oder pendelnden Bewegung (11) darstellt,
bei dem der Durchmesser (d) des Laserstrahles (7) am Bearbeitungsort,
insbesondere im Fokus,
500µm bis 1200µm,
insbesondere 600µm bis 800µm beträgt.

2. Verfahren nach Anspruch 1,
bei dem ein Bauteil aus einer Nickel- oder Kobaltbasissuperlegierung auftragsgeschweißt wird.

3. Verfahren nach einem der vorherigen Ansprüche,
bei dem die Vorschubgeschwindigkeit zwischen 400mm/min und 600mm/min,
insbesondere 500mm/min,
beträgt.

## Claims

1. Method for laser powder build-up welding having an oscillating solidification front, in which a laser beam (7), oscillates,
**characterized in that** the laser beam (7) oscillates at a frequency of 20 Hz to 50 Hz, in particular at 35 Hz, and the amplitude of the oscillation is between 35% and 65%, in particular 50%, of the diameter (d) of the energy beam (7) at the machining location, in particular at the focal point, having a generally linear moving direction (10) which represents the superimposed overall direction of an oscillating or swinging movement (11), wherein the diameter (d) of the laser beam (7) at the machining location, in particular at the focal point, is 500 µm to 1200 µm, in particular 600 µm to 800 µm.

2. Method according to Claim 1,
wherein a component from a nickel-based or cobalt-based super alloy is build-up welded.

3. Method according to one of the preceding claims,
wherein the advancement speed is between 400 mm/min and 600 mm/min, in particular 500 mm/min.

## Revendications

1. Procédé
de soudage laser avec apport de poudre à front de solidification oscillant,
dans lequel le faisceau (7) laser oscille,
**caractérisé en ce que**
le faisceau laser oscille à une fréquence de 20 Hz à 50 Hz, notamment de 35 Hz,
et l'amplitude de l'oscillation représente entre 35% et 65%, notamment 50% du diamètre (d) du faisceau (7) d'énergie à l'emplacement de traitement,
notamment au foyer,
comprenant une direction (10) de déplacement, d'une manière générale linéaire, qui représente la direction d'ensemble superposée d'un déplacement (11) oscillant ou pendulaire, dans lequel le diamètre (d) du faisceau (7) laser à l'emplacement de traitement,
notamment au foyer,
va de 500 µm à 1 200 µm,
notamment de 600 µm à 800 µm.

2. Procédé suivant la revendication 1,
dans lequel on soude avec apport une pièce en superalliage à base de nickel ou à base de cobalt.

3. Procédé suivant l'une des revendications précédentes,
dans lequel la vitesse d'avance est comprise entre 400 mm/min et 600 mm/min,
en étant notamment de 500 mm/min.
